# EUROPEAN PATENT APPLICATION

(11) **EP 2 515 167 A1**
(43) Date of publication of application: **24.10.2012**
(21) Application number: 11169086.3
(22) Date of filing: 08.06.2011
(51) Int. Cl.: G03B 37/04, H04N 5/232, H04N 13/00

(54) **Apparatus, and associated method, for forming panoramic image**

(30) Priority: 22.04.2011 US 92637
(71) Applicant: Research In Motion Limited, Waterloo, ON N2L 3W8 (CA)
(72) Inventor: Gilbert-Schachter, Cliel, Waterloo, Ontario N2L 3L3 (CA); Hong, Sung Ho, Waterloo, Ontario N2L 3W8 (CA); Daigle, Joshua Lucien, Waterloo, Ontario N2L 3W8 (CA)
(74) Representative: Noble, Nicholas

(57) **Abstract**

An apparatus, and an associated method, for forming a panoramic image at a camera. Motion indicia is obtained by one or more sensors. The motion indicia is utilized by a camera controller to cause a panoramic image creator to create a segmented, panoramic image using image frames that permit the creation of the panoramic image of the desired configuration.

## Description

The present disclosure relates generally to a manner by which to form a panoramic, photographic image. More particularly, the present disclosure relates to an apparatus, and an associated method, by which to form a segmented, panoramic image that utilizes movement information of a camera, such as a wireless device having camera functionality, to facilitate the formation of the panoramic image.

The movement information permits a panoramic image to be formed of individual images captured while moving the camera in any of various directions. A panoramic image is formable in any of horizontal, vertical, diagonal, and rotational directions.

### Background

Many new electronic devices have been developed in recent years as a result of advancements in technology. Such devices include devices that provide new functions and services and also devices that provide improved operability of existing functions and services.

For instance, advancements in communication technologies have permitted the development and deployment of new communication devices, equipment, and communication infrastructures that provide for communications using the communication devices and equipment. Use of such new devices has changed the lives and daily habits of many.

Wireless communication systems, such as cellular, WiFi, and other analogous radio systems, are exemplary of communication systems that include, or are based upon, advancements in communication technologies. Such systems have achieved significant levels of usage. And, with additional technological capabilities along with decreasing equipment and operational costs, increased communication capabilities, at lowered costs, is, and shall likely continue to be, provided. Successive generations of wireless communication systems have been developed and deployed. For instance, early-generation, cellular communication systems that were first installed provided primarily for voice communications and provided only limited data communications. Successor-generation, cellular communication systems provided increasingly data-intensive communication capabilities. And, new-generation, cellular communication systems provide for highly data-intensive communication services as well as improved interoperability with other types of communication systems.

Communication made by way of cellular, and other analogous, radio communication systems, are typically made through use of portable wireless devices. The portable wireless devices are typically of dimensions and weights permitting the devices easily to be hand carried and, e.g., stored in a shirt pocket or purse when not in use. A wireless device is thereby likely readily to be available for use whenever needed.

A wireless device includes radio transceiver circuitry that transceives communication signals to permit both the reception and transmission of information. Wireless devices are sometimes provided with additional functionality, both communication-related functionality and other functionality. The additional functionality is sometimes associated with processing functions that provide for the manipulation of data. When so-configured, the wireless device forms a multi-functional device, having multiple functionalities.

An exemplary functionality sometimes provided to a wireless device is a camera functionality. A camera functionality provides for the capture and recordation of a photographic image. Camera functionality is, of course, also provided in a standalone device, such as a conventional digital camera or video recorder or analogous device. Typically, the camera functionality, when provided to a wireless device, does not require significant, if any, increase in the physical dimensional requirements of the device. And, when embodied at, and forming a portion of, a wireless device, the camera functionality is also readily available to a user when the wireless device is hand-carried, or otherwise carried by or in proximity to, the user.

In typical operation, the camera functionality is provided, in part, by a camera lens assembly that provides for the recordation of an image of a subject that is then stored, e.g., as a digital file at a digital storage element. Functionality of the wireless device also sometimes provides for the sending, or other transfer, of the recorded image, such as by a digital-file representation of the image to a data message and sending the file to a remote location.

Sometimes, sophisticated camera functionality is provided either to a wireless device or in a standalone camera device. For instance, sometimes camera functionality provides for the formation of a panoramic image. That is to say, the camera functionality permits a panoramic photograph to be formed. A panoramic photograph is a photograph that exhibits an elongated field of view. A panoramic photograph is formed using any of various techniques. Amongst the techniques is a stitching technique in which the panoramic photograph is formed of segments. The segments are successively-recorded, related, image frames that have slightly overlapping fields of view. Conventional techniques, however, are sometimes limiting, and the resultant panoramic photograph is correspondingly limited.

Improvements to the existing art would therefore be advantageous. It is in light of this background information that the significant improvements of the present disclosure have evolved.

### Brief Description of the Drawings

Figure 1 illustrates a functional block diagram of a communication system, which includes an exemplary implementation of the present disclosure as a portion thereof.

Figure 2 illustrates a functional block diagram of a portion of the apparatus of an implementation of the present disclosure.

Figure 3 illustrates a process diagram representative of the process of operation of an implementation of the present disclosure.

Figure 4 illustrates a functional block diagram of a portion of the apparatus of another implementation of the present disclosure.

Figure 5 illustrates a process diagram representative of the process of operation of an implementation of the present disclosure.

Figure 6 illustrates a functional block diagram of a portion of the apparatus of another implementation of the present disclosure.

Figure 7 illustrates a process diagram representative of the process of operation of an implementation of the present disclosure.

Figure 8 illustrates a method flow diagram representative of the method of operation of an implementation of the present disclosure.

### Detailed Description

The present disclosure, accordingly, advantageously provides an apparatus, and an associated method, for forming a panoramic, photographic image.

Through operation of an implementation of the present disclosure, a manner is provided by which to form a segmented, panoramic image that utilizes movement information of a camera, such as a camera functionality embodied at a wireless device.

In one aspect of the present disclosure, the movement information permits a panoramic image to be formed of individual images captured while moving the camera in any of various directions. Through use of the movement information, the panoramic image is formable in a manner that is elongated in any direction including a horizontal direction, a vertical direction, a diagonal direction, and rotationally in up to a full 360 degree panorama.

In one implementation of the present disclosure, the movement information is associated with an image frame. And, multiple image frames are captured. And, once associated together, the sensed, movement information and the associated, captured image is provided to a panoramic image creator, such as stitching functionality to stitch, or otherwise combine, the captured images to form the panoramic image.

In another aspect of the present disclosure, the movement information is utilized to determine which image frames, i.e., exactly when to capture successive images, so that the frames that are needed to create a desired panoramic image are captured. Once captured, the images are provided to a panoramic image creator, such as stitching functionality whereat the panoramic image is formed.

In another aspect of the present disclosure, the movement information is utilized to identify proper positioning of a camera to capture image frames that are appropriate to create a desired panoramic image. Once the proper position is determined, information is provided to a user of the device at which the functionality is implemented. The information is, e.g., displayed, and the user is able to position the camera in the appropriate position to provide for the capture of the desired image frame. And, the user causes the image frame to be captured. The captured image, or representation thereof, is provided to a panoramic image creator. And, successive, captured images, provided to the panoramic image creator, permit the creation of the panoramic image of a desired configuration.

In another aspect of the present disclosure, sensors are provided to sense the movement information. The sensor that senses, or otherwise detects, the movement information are of any of various types, configurations, and constructions. One or more sensors, providing one or more types of sensed information, e.g., are embodied at the device having the camera functionality. For instance, the sensor comprises an accelerometer. Or, the sensor comprises a magnetometer. In other implementations, the sensor is comprised of other sensing elements, e.g., a light sensor or a gyroscopic device. Or, multiple sensors are utilized.

In another aspect of the present disclosure, movement-related information, i.e., motion indicia, such as the sensed data sensed by a sensor, is provided to a controller. The sensed data is utilized by the controller to facilitate the formation of the panoramic iamge.

The controller is operable in any of various camera-operating modes to create a panoramic image. For instance, in one mode, a burst mode, a successive series of image frames are captured. Movement information related to the image frame, when captured, is associated with the image frame, and the information is used in the formation of the panoramic image. In another operating mode, sensor-provided information is used to identify when to capture an image. Once a set of captured images is obtained, the captured images are used to form the panoramic image. And, in another operating mode, sensor-provided information is used to instruct or coach a user of a device at which the camera functionality is implemented to position the device best to capture images usable to form a panoramic image of desired configuration.

In another aspect of the present disclosure, a selector, i.e., a selection detector, such as an input actuator is provided to select the operating mode in which the device is to operate to form the panoramic image. The selection is determinative of the manner in which the device is operated to provide for the formation of the panoramic image.

In one implementation, the functionality is implemented at a wireless device, such as a so-called, camera phone. A panoramic image of any of various configurations is formable through operation of an implementation of the present disclosure.

In these and other aspects, therefore, an apparatus, and an associated method, is provided for facilitating formation at camera of a panoramic image having an elongated field of view. A detector is configured to detect selection of the desired image configuration. A controller is configured to control the formation of the panoramic image of the desired configuration utilizing detected motion indicia related to the camera.

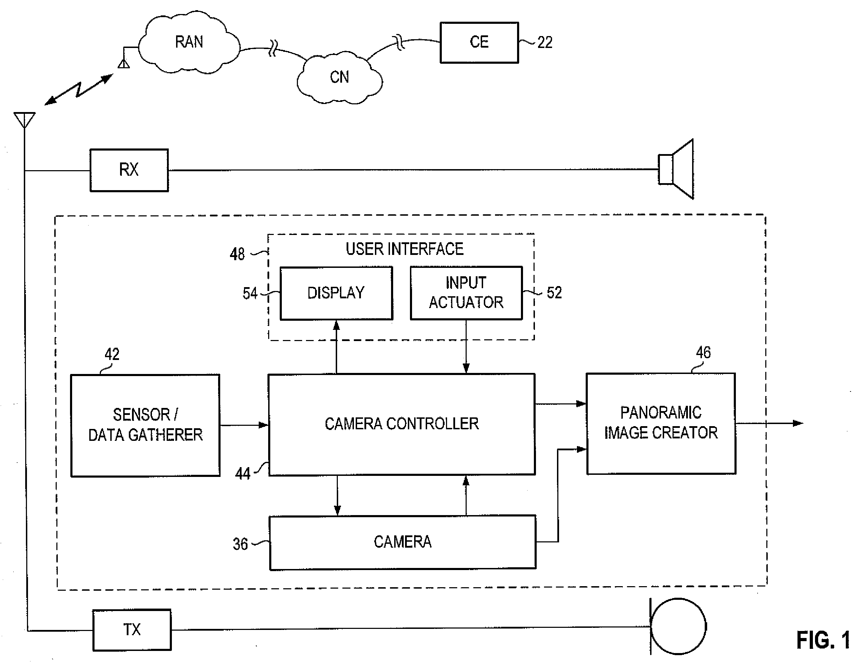

Turning first to Figure 1, therefore, a communication system, shown generally at 10, provides for communications with wireless devices, of which the wireless device 12 is representative. In the exemplary implementation, the communication system comprises a cellular, or cellular-like, communication system that operates in general conformity with a communication-system operating standard. While the following description shall describe exemplary operation with respect to the exemplary implementation, the communication system 10 is also representative of various other wireless communication systems and, more generally, any of various communication systems, both wireless and wire line. Additionally, while the device 12, in the exemplary implementation forms a communication device, in other implementations, the device forms a standalone device that includes the functionality of an implementation of the present disclosure. That is to say, in an alternate implementation, the functionality of an implementation of the present disclosure is implemented at a device that does not include separate communication capability.

The communication system includes a network part, here formed of a radio access network (RAN) 16 and a core network (CN) 18. Communication devices are placed in communication connectivity with the core network. Here, a communication endpoint (CE) 22 is representative of such a communication device.

The wireless device includes transceiver circuitry, represented in Figure 1 by a receive (Rx) part 24 and a transmit (Tx) part 26. The receive part 24 operates to receive information sent by the radio access network 16 of the network part. And, the transmit part 26 operates to send information to the network part, such as information originated at the device 12. For instance, information sourced at the device 12 is caused to be sent by the transmit part 26 for communication to the communication endpoint 22 by way of radio channels 28 defined upon a radio air interface extending between the device 12 and the network portion, routed through the radio access network 16 and core network 18 of the network portion, and delivered to the communication endpoint 22. And, information sourced at the communication endpoint 22 for communication to the wireless device 12 is routed through the core network 18 and the radio access network 16, of the network part, communicated upon radio channels of the radio air interface 28. When delivered to the device 12, the information is received at the receive part 24.

In the exemplary implementation, the device 12 is of small dimensions and is permitting of hand-carriage by a user. Because the device is conveniently carried, the device is more likely to be available for use by the user when needed to perform a communication, or other, function.

The device 12 further includes an apparatus 32 having camera functionality 32. The camera functionality formed of the apparatus provides for the capturing both still images and video sequences, i.e., sequences of a plurality of individual image frames. The camera functionality 32 includes a camera 36, which here includes a camera lens, sensor array, and other associated camera elements. The camera functionality 32, which forms the apparatus of an implementation of the present disclosure, also includes a sensor 42, a camera controller 44, a panoramic image creator 46, and a user interface 48. The elements of the apparatus 32 are functionally represented, implementable in any desired manner, including hardware elements, firmware elements, processing circuitry that executes code, and combinations thereof.

The camera functionality provided by the apparatus 32 permits images of subjects to be captured both to form conventional images of conventional size and also panoramic images that are elongated in any direction. That is to say, the resultant panoramic exhibits an elongated field of view in any direction.

The sensor 42 detects motion-related indicia and is implemented by any of various devices, such as an accelerometer, a magnetometer, a gyroscopic device, or any of various other motion-related, sensing devices. In various implementations, the sensor 42 comprises a plurality of sensors, such as an accelerometer that senses acceleration and a magnetometer that senses orientation. Detections made by the sensor 42 comprises motion indicia related to the device 12 at which the apparatus 32 is embodied. The data, i.e., motion indicia, is provided to the camera controller 44. The camera controller, in one implementation, comprises a processor that executes code to control operation of the camera 36 to facilitate formation of a panoramic image of a desired configuration. In other implementations, the controller is implemented in other manners.

The controller is operable in various modes to facilitate the formation of a panoramic image. The mode pursuant to which the controller operates is, for instance, user selectable by way of the user interface 48. An indication of the user selection is, e.g., provided by way of an input actuator, which forms part of the user interface 48. The user interface further includes a display element 54. In operation, the camera controller controls operation of the camera 36 to control when image frames are captured, provide for association of detected motion indicia with captured images, or teach or coach a user of the device at which the apparatus 32 is implemented to position a camera lens of the camera 36 best to capture an image usable to form part of a desired panoramic image.

Information is provided variously by the camera 36 and the camera controller 44 to the panoramic image creator 46. The image creator 46 functions to create the panoramic image using captured image frames captured by the camera. Pursuant to an implementation of the present disclosure, the panoramic image formable by the panoramic image creator is of any of the various configurations and is not limited to, e.g., a single panoramic-image type. That is to say, the panoramic image creator is capable of creating a panoramic image, formed of a set of image frames, elongated in any direction including 360 degree, two dimensional, diagonal, vertical, and horizontal elongation.

The panoramic image creator, in one implementation, comprises a stitching algorithm, or program content, that blends together overlapping portions of adjacent images to form the panoramic image. And, more generally, the panoramic creator forms a segmented, panoramic image formed of segments, i.e., individual, captured image frames that, when properly blended together, form the panoramic image.

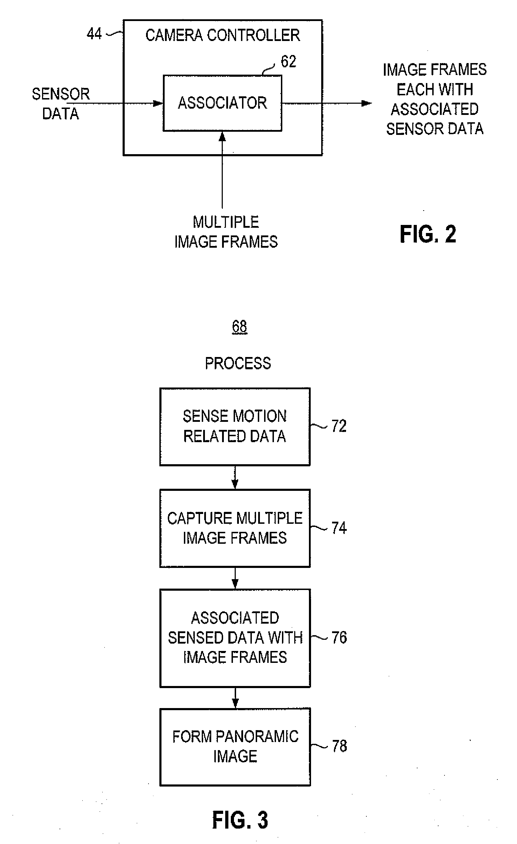

Figure 2 illustrates the camera controller 44 that forms part of the apparatus 32 of an implementation of the present disclosure. In this implementation, the camera controller includes an associator 62 that associates sensed data, i.e., motion indicia, provided by one or more sensors 42 (shown in Figure 1) that are indicative of motion-related parameters. In one exemplary implementation, the sensor data includes acceleration and orientation data. The associator 62 is further provided with at least indications of image frames captured by the camera 36 (shown in Figure 1). The associator functions to associate the motion indicia, i.e., the sensor data, with the individual frames. The association, for instance, associates sensed data, sensed at the time at which the associated image is captured. The associator provides, or causes to be provided, the image frames, each associated with the sensed data, to the panoramic image creator 46 (shown in Figure 1).

Figure 3 illustrates a process 68 representative of the controller mode of operation shown in Figure 2. Selection of this mode of operation is made, e.g., by a device user through selection entered by way of the user interface 48 (shown in Figure 1).

Upon commencement of the operation, motion-related data, i.e., motion indicia, is sensed and provided, indicated by the block 72, to the camera controller. Then, and as indicated by the block 74, multiple image frames are captured and at least indications thereof are provided to the camera controller.

The sensed data is associated, indicated by the block 76, with the at least indications of the captured image frames. And, as indicated by the block 78, a panoramic image is formed.

Selection is made of the operating mode and of the configuration of the resultant, panoramic image. The camera controller operates to facilitate configuration of the resultant, panoramic image utilizing the associations made by the camera controller.

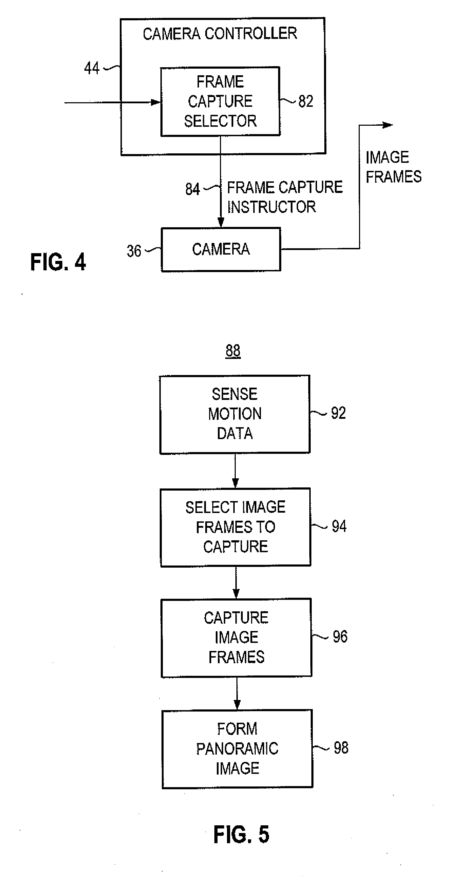

Figure 4 illustrates the camera controller 44 of an alternate implementation of the present disclosure. User selection is also made to select operation in this mode and to identify the desired configuration of a panoramic image that is to be created.

In this implementation, the camera controller includes the functionality of a frame capture selector 82. The frame capture selector is provided with sensed data, i.e., motion indicia, that provides movement related indications to the controller. The frame capture selector operates, utilizing the sensed data, to select when the camera 36 should capture an image. Here, the selector 82 causes generation of a frame capture instructor signal on the line 84 that is provided to the camera to cause the camera to capture the image at the selected times. Images captured by the camera 36 are provided to the panoramic image creator 46 (shown in Figure 1). A panoramic image of desired configuration is created.

Figure 5 illustrates a process diagram 88 representative of the process of operation of the implementation shown in Figure 4. First, and as indicated by the block 92, the motion data is sensed and provided to the camera controller. Then, and as indicated by the block 94, selection of image frames that are to be captured in order to create a desired panoramic image.

Responsive to the image selection, the appropriate image frames are captured, indicated by the block 96. Then, and as indicated by the block 98, the panoramic image is formed.

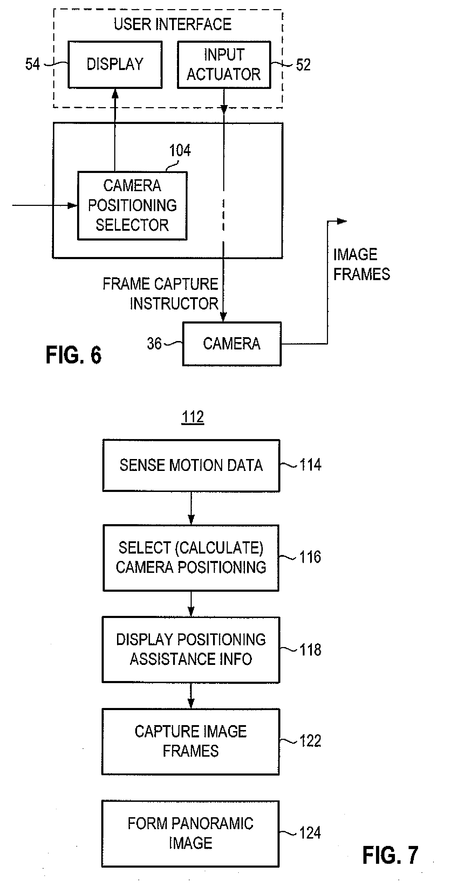

Figure 6 illustrates elements of the apparatus 36 operative pursuant to another mode of operation pursuant to an implementation of the present disclosure. Operation in the mode is also, e.g., user selectable. The mode of operation and the desired configuration of the resultant panoramic image is, e.g., selected by a user of the device by way of input actuation of an input actuator 52 of the user interface 48.

In this mode of operation, the sensed data forming motion indicia is provided to a camera position selector 104. The camera position selector determines camera position, i.e., movement and orientation, required to permit the formation of the desired, panoramic image. The selector provides for display at the display element 54 of indications to coach, teach, or otherwise identify to a user of the device in what manner to position or move the device to orient the device best to capture an image needed to form the desired, panoramic image. Responsive to the display, the user of the device is able to provide appropriate input by way of the input actuator 52 to cause the camera 36 to capture the image, once the device is properly positioned and oriented.

Captured images are provided to the panoramic image creator 46 (shown in Figure 1) whereat the panoramic image is created using the captured images.

Figure 7 illustrates a process 112 representative of the mode of the implementation shown in Figure 6 in which displays, or other human-perceptible representations, are provided to a user to instruct the user in appropriate positioning of the camera 36 or the device at which the camera is embodied.

First, and as indicated by the block 114, motion data is sensed and provided to the camera controller 44. Then, and as indicated by the block 116, camera positioning indicia is calculated or otherwise selected.

The positioning information is displayed, as indicated by the block 118 or otherwise presented to a user in human perceptible form. The user moves or orients the camera into an appropriate position and causes image frames to be captured, indicated by the block 122. And, as indicated by the block 124, the panoramic image is formed.

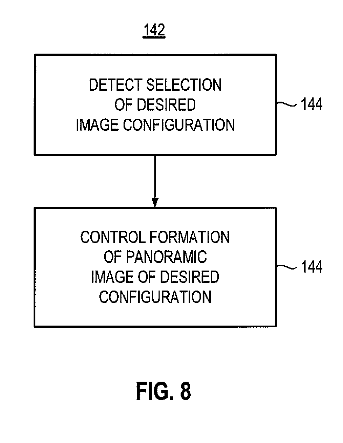

Figure 8 illustrates a method flow diagram 142 representative of the method of operation of an implementation of the present disclosure. The method facilitates formation at a camera of a panoramic image.

First, and as indicated by the block 144, a motion parameter of the camera is determined. Then, and as indicated by the block 146, the panoramic image is created making use of the determined motion parameter to blend together a set of sensed images.

Thereby, a manner is provided by which to create a panoramic image of a desired configuration. The panoramic image is elongated in any desired direction, including horizontally, vertically, diagonally, and circularly, up to a 360 degree rotation.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating formation at a camera of a panoramic image of a desired image configuration, said apparatus comprising:
a detector configured to detect selection of the desired image configuration; and
a controller configured to control the formation of the panoramic image of the desired configuration utilizing detected motion indicia related to the camera.

2. The apparatus of claim 1 further comprising a sensor configured to detect the motion indicia related to the camera.

3. The apparatus of claim 1 wherein said controller is configured to determine a motion parameter responsive to a motion indicia indicative of detected motion of the camera.

4. The apparatus of claim 3 wherein the motion indicia comprises an acceleration indication.

5. The apparatus of claim 3 wherein the motion indicia further comprises a camera orientation.

6. The apparatus of claim 1 wherein said controller is configured to control formation of a segmented, panoramic image.

7. The apparatus of claim 6 wherein said controller is configured to cause blending together of a set of captured images to form a segmented, panoramic image with adjacent captured images of the set having overlapping fields of view.

8. The apparatus of claim 7 wherein the motion parameter determined by said controller is configured to associate information indicia with the captured images.

9. The apparatus of claim 1 wherein said controller is configured to select when to capture image frames that form the panoramic image.

10. The apparatus of claim 1 wherein said controller is configured to select positioning of the camera at which to capture image frames to form the panoramic image.

11. A method for facilitating formation, at a camera, of a panoramic image of a desired image configuration, said method comprising:
detecting selection of the desired image configuration; and
controlling the formation of the panoramic image of the desired configuration utilizing detect motion indicia related to the camera.

12. The method of claim 11 further comprising detecting the motion indicia related to the camera.

13. The method of claim 11 wherein the motion indicia comprises an acceleration indication.

14. The method of claim 11 wherein the motion indicia further comprises a camera orientation.
